# EUROPEAN PATENT SPECIFICATION

(11) **EP 1 288 950 B1**
(45) Date of publication and mention of the grant of the patent: **03.12.2008**
(21) Application number: 02254067.8
(22) Date of filing: 11.06.2002
(51) Int. Cl.: G11B 27/10, G11B 27/32, G11B 20/12, G11B 19/02, G09B 5/06, G06F 17/30

(54) **Information storage medium containing information for providing markup documents in multiple languages, apparatus and method for reproducing thereof**
Informationsspeichermedium, das Information zum Bereitstellen von Dokumenten einer Markierungssprache in mehreren Sprachen enthält, Gerät und Verfahren zur Wiedergabe dafür
Support de stockage d'informations contenant des informations pour fournir des documents markup en plusieurs langues, appareil et procédé pour reproduire de celui-ci

(30) Priority: 11.06.2001 KR 2001032493; 20.10.2001 KR 2001064943
(43) Date of publication of application: 05.03.2003
(73) Proprietor: SAMSUNG ELECTRONICS CO., LTD., Suwon-City, Kyungki-do (KR)
(72) Inventor: Kim, Byung-Joon, Suwon-si, Gyeonggi-do (KR); Ko, Jung-wan 315-401 Daewoo Apt.,956-2 Cheongmyung, Gyeonggi-do,Republic of Korea, 442 470 (KR); Chung, Hyun-kwon, Gwangju-gun, Gyeonggi-do (KR); Bak, Bong-gil, Seoul (KR)
(74) Representative: Brandon, Paul Laurence

(56) References cited:
- EP-A- 0 762 422
- EP-A- 0 863 509
- EP-A- 0 886 276
- WO-A-00/63915
- WO-A-02/05104
- WO-A1-00/63915
- US-A- 4 899 292
- US-A- 5 548 509
- US-A- 6 047 292
- PATENT ABSTRACTS OF JAPAN vol. 1999, no. 11, 30 September 1999 (1999-09-30) -& JP 11 161663 A (TOSHIBA CORP), 18 June 1999 (1999-06-18) -& JP 11 161663 A 18 June 1999 (1999-06-18)
- PATENT ABSTRACTS OF JAPAN vol. 2000, no. 09, 13 October 2000 (2000-10-13) -& JP 2000 182359 A (TOSHIBA CORP;TOSHIBA AVE CO LTD), 30 June 2000 (2000-06-30) -& US 6 259 858 B1 (ANDO ET AL) 10 July 2001 (2001-07-10)

## Description

The present invention relates to an information storage medium, a reproducing apparatus, and a reproducing method, and more particularly, but not exclusively, to an interactive information storage medium containing multi-language markup document support information which is provided together with a reproduced data stream displayed in a display window defined by a markup document, and an apparatus and a method for reproducing the information on the storage medium.

A proposed interactive DVD medium in the current market (e.g., PC Friendly DVD disc) can be reproduced in an interactive mode based on a PC (Personal Computer). The interactive DVD medium contains markup language documents and AV (audio/video) Data. AV data recorded on the interactive DVD medium is reproduced as an AV data stream and displayed in two ways: in a video mode or an interactive mode. In the video mode, AV data is displayed in the same way as it is displayed on regular DVD players while in the interactive mode, AV data is displayed together with an HTML document in a display window defined by the HTML document. If the interactive mode is selected by a user, a web browser installed in a PC (Personal Computer) displays the HTML document recorded on the interactive DVD medium. The AV data related to the HTML document is reproduced and displayed in the display window defined by the HTML document.

For example, in the case of a movie whose content is the AV data, a video is played in the display window defined by the HTML document, and in the remaining part of the display screen, a variety of supplementary information including scripts, stories, and photos of actors and actresses can be displayed. The supplementary information may be displayed in synchronization with a title (AV data). For example, when an actor is on stage, an HTML document containing his brief history is invoked and displayed together with his video.

An existing DVD-video standard defines sub-picture data that provides a multi-language captioning together with the reproduced title. Therefore, the user can enjoy captions in a desired language when watching a program.

However, the proposed interactive DVD is disadvantageous in that it allows text-based supplementary information to be displayed in only one language, together with the AV data in the interactive mode. That is, the proposed interactive DVD does not have the capability to present the supplementary information displayed through the HTML document in multiple languages. Therefore, a user cannot understand text-based information displayed through the HTML document in a language that is foreign to the user. As a result, the interactive mode provided by the interactive DVD is not attractive to the user

EP-A-0 886 276 discloses an information record medium on which information to be reproduced by an information reproducing apparatus (300) connected to an external apparatus (500,502,600,700) is recorded.

EP-A-0 762 422 discloses an interactive recording/reproducing medium including: image data; image reproduction control data which defines an operation instruction received from operation input apparatus and a reproduction procedure for said image data in correlation with each other, said operation input apparatus performing a reproducing operation for said image data in an interactive manner; image related data related to the contents of said image data; and relation defining information which defines the relation between said image related data and said image data.

It is an aim of preferred embodiments of the present invention to provide an information storage medium for providing text information displayed through a markup document in an interactive mode in multiple languages, and an apparatus and a method for reproducing the information on the storage medium.
According to the present invention in a first aspect, there is provided, an information storage medium comprising:
audio/video (AV) data; the information storage medium further comprising:
   multiple markup documents which contain text information in multiple languages, respectively, to be displayed in a selected language and define a display window to display AV data decoded and reproduced as an AV data stream;
   multi-language markup document support information for being referred to in order to display a markup document in the selected language;
   sub-picture data for providing a multi-language captioning together with the reproduced AV data, wherein the multiple markup documents which contain text information on multiple languages are displayed in a selected language with regard to the AV data or the sub-picture data; and
   navigation data on the AV data and the sub-picture data, wherein the AV data and the sub-picture data are decoded and reproduced as the AV data stream and captioning with reference to the navigation data; wherein
   the AV data, the sub-picture data, and the navigation data are recorded on a video directory while the markup documents and the multi-language markup document support information are recorded on an interactive directory; wherein
   the multi-language markup document support information comprises language selection conversion information for mapping a related markup document to the selected language, and language directory information for indicating the path to the markup documents; and wherein
   the multi-language markup document support information further includes supportable language information that indicates the language that can be supported and information that indicates whether a language can be converted during reproduction.

According to the present invention in a second aspect, there is provided, a reproducing method for reproducing AV data recorded on an information storage medium and displaying the AV data in a display window defined by a markup document, the reproducing method comprising:
(a) reading a markup document designed to be displayed in a selected language for caption, out of multiple markup documents that enable text information to be displayed in multiple languages, respectively,
(b) reading and decoding the AV data,
(c) displaying the AV data, which has been reproduced, as an AV data stream through the read markup document,
(d) receiving information on a selected language in order to display the markup document;
(e) retrieving the language corresponding to the received language information; and
(f) retrieving the markup document in the directory corresponding to the retrieved language; wherein step (e) comprises:
   (e0) verifying if the language can be converted during the reproduction and performing (e) if language conversion is possible.

Further features of the present invention are set out in the appended claims.

The above object and advantages of the present invention will become more apparent by describing in detail preferred embodiments thereof with reference to the attached drawings in which:
FIG. 1 is a block diagram of a reproducing apparatus according to a preferred embodiment of the present invention;
FIG. 2 shows the structure of files in an embodiment of a DVD of the present invention;
FIG. 3 is a diagram of the volume space of the embodiment of the DVD of the present invention;
FIG. 4 is a diagram showing the structure of file DVD_ENAV.IFO explained in FIGS. 2 and 3;
FIG. 5 is a detailed structure diagram of an embodiment of multi-language markup document information;
FIG. 6 shows examples of markup documents retrieved and displayed with reference to the multi-language markup document information of FIG. 5;
FIG. 7 is a flowchart explaining a reproduction method according to an embodiment of the present invention; and
FIG. 8 is a flowchart explaining a reproduction method according to another embodiment of the present invention.

The present invention now will be described more fully with reference to the accompanying drawings, in which preferred embodiments of the invention are shown. ^{┌}A markup document_{┘} , in the specification, means not only a markup document itself but also a web resource that includes files inserted into or linked with the markup document. An HTML document means a document which is prepared in a mark-up language such as XML or SGML and can be interpreted and displayed by the web browser.

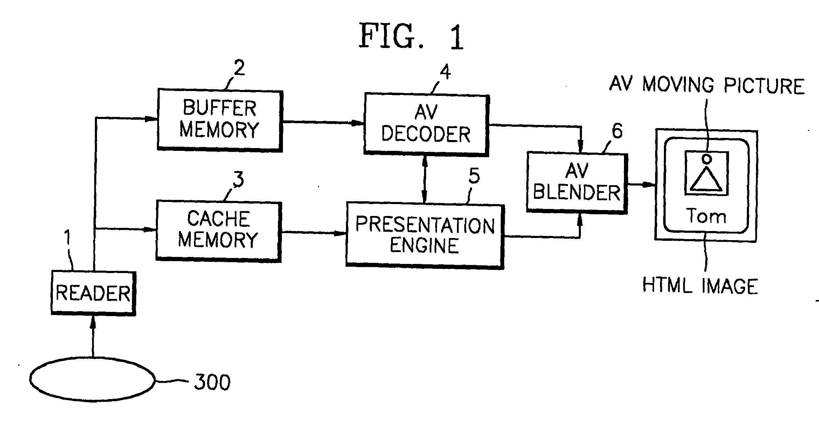

FIG. 1 is a block diagram of a reproducing apparatus according to a preferred embodiment of the present invention.

With reference to FIG. 1, the reproducing apparatus decodes AV data recorded on an embodiment of a DVD 300 of the present invention and reproduces the AV data as an AV data stream. Then, the reproducing apparatus displays the AV data in a display window defined by a markup document in an interactive mode and includes a reader 1, a buffer memory 2, a cache memory 3, an AV decoder 4, a presentation engine 5, and an AV blender 6.

The presentation engine 5 supports the interactive mode.

In terms of software, the presentation engine 5 includes application programs such as a markup document viewer (ex. web browser), a program interpretation engine, and a plug-in that interfaces through Application Program Interface (API) with the operating system of the reproducing apparatus. With the API, which is a special pre-defined method, the presentation engine 5 can send a request to the OS and other application programs. The program interpretation engine includes a JavaScript or a Java interpretation engine. The plug-in enables various markup documents to be displayed.

In terms of hardware, the presentation engine 5 is set to have a default value on the markup document language information of reproducing apparatus, that is, the information about the language of the markup document that is displayed when the interactive mode is selected. For example, the reproducing apparatus to be released in English-speaking nations has markup document language information that commands the selection of the markup document having text information in English.

It is preferable that the markup document language information varies depending on where the reproducing device is marketed or which languages are dominant. If a user changes a default value on the markup document language information, the markup document is displayed in the new selected language or relevant language.

The reader 1 reads the HTML document or the AV data from the DVD 300. The embodiment of the DVD 300 of the present invention contains a data packet where sub-picture data and AV data are multiplexed and packaged. Therefore, reading the AV data means reading the sub-picture together with the AV data. However, if the user does not select the caption display function, the sub-picture data is discarded without being reproduced. The buffer memory 2 buffers the AV data read by the reader 1. The cache memory 3 caches the markup document read by the reader 1. The AV decoder 4 decodes the AV data buffered in the buffer memory 2 and outputs the AV data stream. The presentation engine 5 interprets the read markup document and identifies the location of the display window. Then, the AV blender 6 displays markup document outputted by the presentation engine 5 and the AV data stream outputted by the AV decoder 4 in the display window.

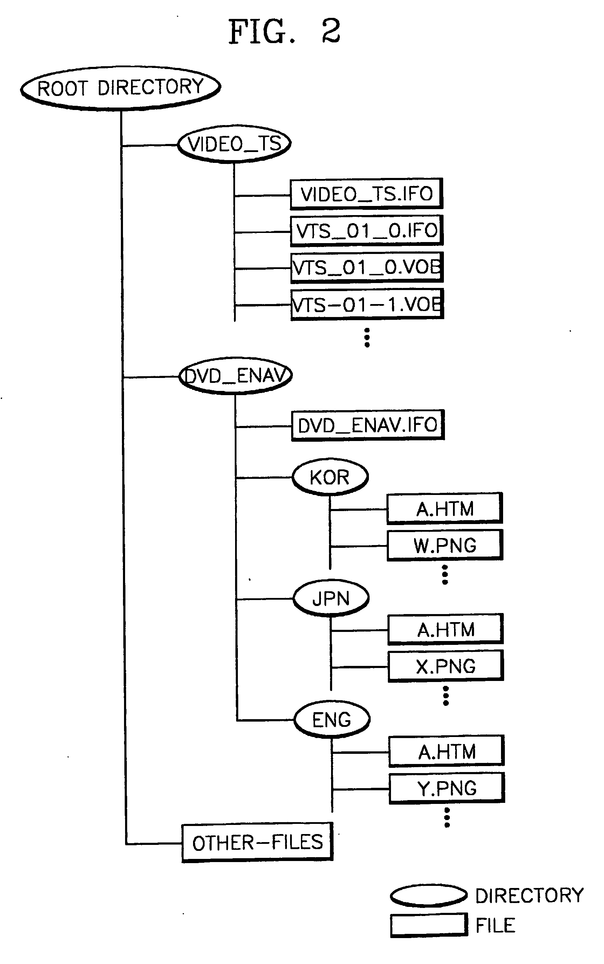

FIG. 2 shows the structure of files in the embodiment of the DVD 300 of the present invention.

The DVD 300 contains multiple markup documents having the same meaning content in different languages so that text information included in the markup documents can be displayed in multiple languages. That is, the DVD 300 according to the preferred embodiments of the present invention includes multiple markup documents which contain exactly the same meaning text information in multiple languages, respectively.

With reference to FIG. 2, a root directory includes directories VIDEO_TS and DVD_ENAV. The VIDEO_TS is a DVD video directory containing the AV data, and DVD_ENAV is a DVD interactive directory for recording the data including the markup document that supports the interactive mode.
The VIDEO_TS directory includes VIDEO_TS.IFO, VTS_01_0.IFO, VTS_01_0.VOB, and VTS_01_1.VOB, .... VIDEO_TS.IFO contains the reproducing control information (or navigation data) on the entire video title and the language information designated as a default value of the video title. In VTS_01_0.IFO, the reproducing control information on the first video title set is recorded. VTS_01_0.VOB and VTS_01_1.VOB are Video Object Set (VOBS) that make up the video title set. Each VOB includes video data, audio data, and sub-picture data. The sub-picture data is designed to display the captions of the movie. More detailed configuration information is included in the DVD-Video Standard DVD-Video for Read Only Memory Disc 1.0.

The DVD_ENAV directory includes the file DVD_ENAV.IFO which contains the reproducing control information on the entire title information in interactive mode. To be more specific, DVD_ENAV.IFO includes the definition and configuration of the relevant directory, the number of titles included, basic information, the language used for the title, information on captions and fonts, markup document display information such as resolution and color, and copyright information. DVD_ENAV.IFO further includes multi-language markup document information according to the present embodiment. The multi-language markup document information will be described in detail later. In addition, multi-language markup document directories, including KOR, JPN, and ENG, are prepared to support languages of the markup document according to the embodiment. KOR, JPN, and ENG indicate a Korean Language directory, a Japanese Language directory, and an English Language directory, respectively. Each multi-language markup document directory includes the file A.HTM which has the same meaning text information in the associated language, and files W.PNG, X.PNG, and Y.PNG which are displayed together with A.HTM. Because W.PNG, X.PNG; and Y.PNG are the same image, they may have the same file name. A Portable Network Graphics (PNG) file is a compressed graphic image file. Here, it is obvious that an audio file such as an au file or an aiff file can be attached to an image file instead of the PNG file in another language.

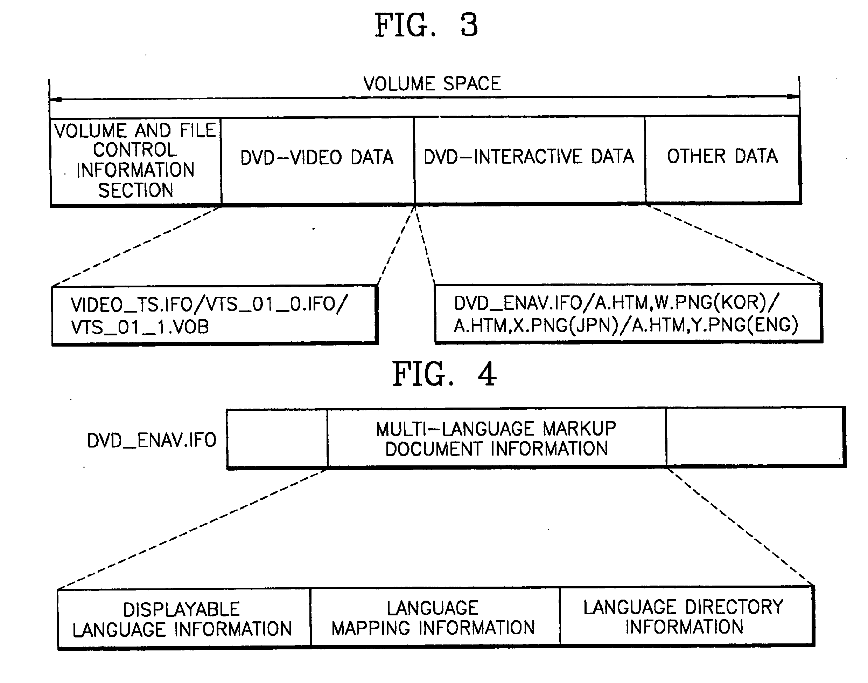

FIG. 3 is an outline diagram of the volume space of the embodiment of the DVD 300 of the present invention.

With reference to FIG. 3, the volume space of the DVD 300 includes a control information section that includes the control information on volume and the file, a DVD-video data section that includes a relevant video title data, and a DVD-interactive data section that contains data that supports the interactive mode.

The DVD-video data section contains the files VIDEO_TS.IFO, VTS_01_0.IFO, VTS_01_0.VOB, VTS_01_1.VOB, ... that are recorded in DVD_TS, which is the DVD video directory of FIG. 2. The DVD-interactive data section contains the files DVD_ENAV.IFO, A.HTM (KOR), A.HTM (JPN), A.HTM (ENG), W.PNG, X.PNG, and Y.PNG, which are recorded in DVD_ENAV, the DVD interactive directory of FIG. 2.

FIG. 4 shows the structure of the file DVD_ENAV.IFO explained in FIGS. 2 and 3.

With reference to FIG. 4, DVD_ENAV.IFO includes the multi-language markup document information according to the present invention. The multi-language markup document information contains information on the kind of languages that can be displayed, language mapping information, and information on the directory by respective language.

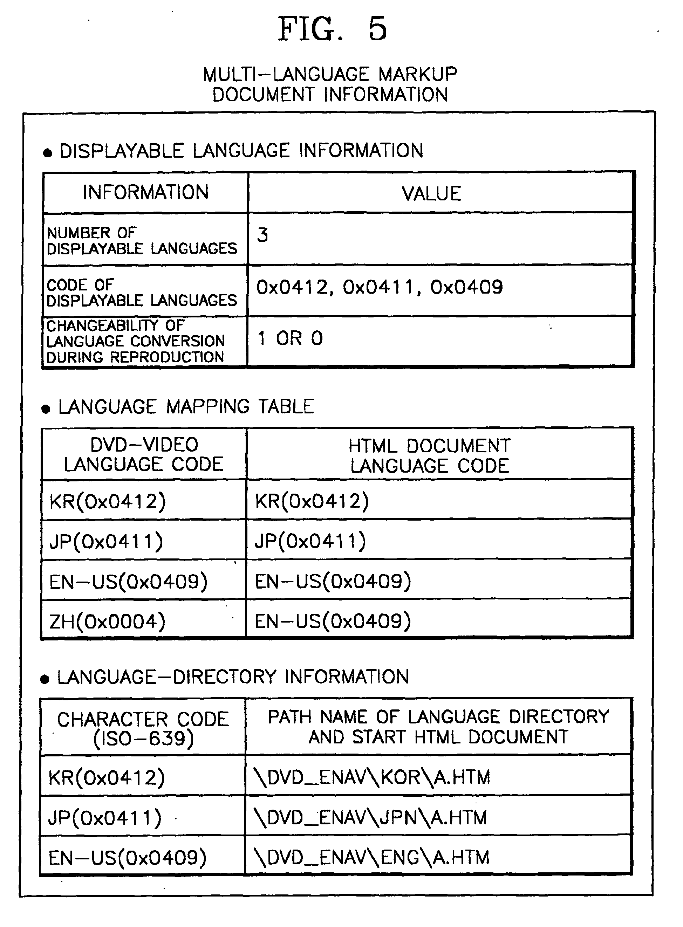

FIG. 5 is a detailed structure diagram of an embodiment of multi-language markup document information according to the present invention. With reference to FIG. 5, the displayable language information included in the multi-language markup document information includes information on the number of displayable languages, the codes of the displayable languages and whether the languages can be changed during reproduction.

The codes of the displayable languages can be indicated as ISO-639 language codes. 0x0412, 0x0411 and 0x0409 are hexadecimal values and indicate Korean, Japanese, and English, respectively. In a language mapping table, which contains the language mapping information, caption language codes are mapped to language codes for mapping to relevant HTML documents which are referred to for extracting the markup documents that contain text information to be displayed in the languages corresponding to the caption language codes. To be more specific, the captions are displayed in Korean, Japanese, English, or Chinese. The markup document displayed with the captions is displayed in Korean, Japanese, or English. Therefore, if the user selects Korean, Japanese, or English for the captions, the markup document is displayed in the corresponding language, Korean, Japanese, or English. However, if the user selects Chinese for caption display, the markup document is displayed in English. The number of displayable languages can vary. Even when the markup document is displayed without interworking with the captioning, the language mapping table can be referred to for extracting the markup document. For example, if the language of the reproducing apparatus is set as Chinese (ZH), the presentation engine 5 displays the markup document prepared in English (EN-US) by referring to the language mapping table. The information on changeability of markup document language indicates whether the user can change the language during reproduction of the AV data. 0 indicates that the language cannot be changed while 1 indicates that the language can be changed.

The language directory information includes the path names of the multi-language markup document directories containing markup documents corresponding to the displayable language codes, respectively and the file name of the HTML document designated as a start document file.

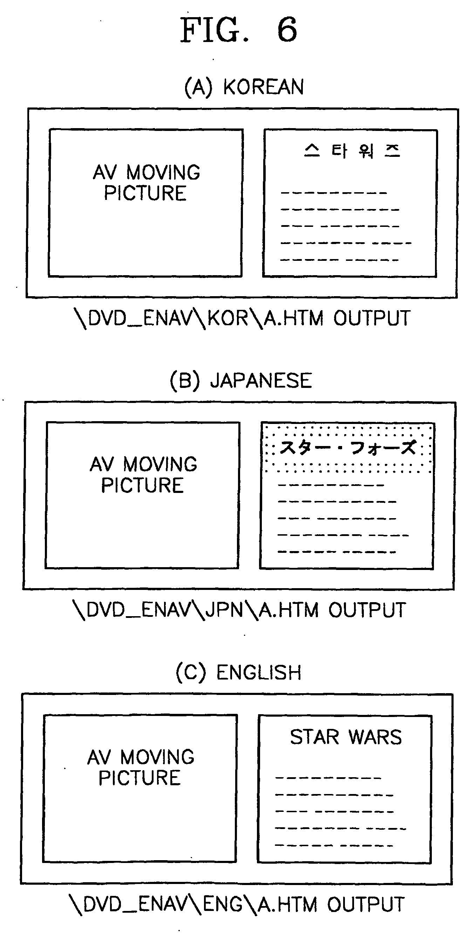

FIG. 6 shows examples of the markup documents retrieved and displayed with reference to the multi-language markup document information of FIG. 5.

FIGS. 6A through 6C show markup documents displayed when Korean captions, Japanese captions, and English or Chinese captions are selected, respectively. In case of Chinese caption, the captions language is different from the text information is displayed in the markup document. That is, since a multi-language markup document is supported in the interactive mode, embodiments of the present invention can display the markup document containing the text information prepared in the language mapped to the captioning selected by the user or the language selected by the user. If the user changes the Korean captions into Japanese captions while a video title is reproduced in the interactive mode, the markup document displayed together is changed from FIG. 6A to FIG. 6B. That is, the present embodiment reads and displays A.HTM, the markup document, stored in the multi-language markup document directory JPN by referring to the language mapping table and the language directory information shown in FIG. 5.

If the markup document is displayed without interworking with the captioning, the markup document containing the text information prepared in the language selected by the user is displayed even though the caption is not displayed.

The reproducing method according to a preferred embodiment of the invention is described as follows.

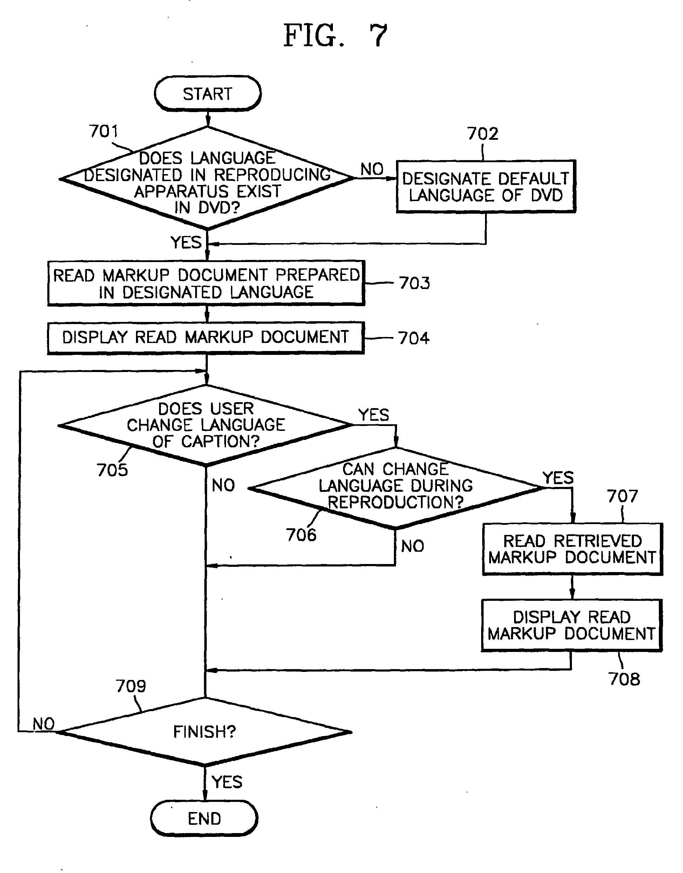

FIG. 7 is a flowchart explaining a reproduction method according to the present invention.

With reference to FIG. 7, if the interactive-DVD 300 according to the present invention is inserted into the reproducing apparatus, the presentation engine 5 of the reproducing apparatus retrieves the language information recorded on VIDEO_TS.IFO and identifies if the language designated as a default value of the reproducing apparatus exists in step 701. If the language information recorded on VIDEO_TS.IFO of the interactive-DVD 300 does not have the language designated as the default value of the reproducing apparatus, the presentation engine 5 sets the language designated as a default value of VIDEO_TS.IFO or DVD_ENAV.IFO of the interactive-DVD 300 as the default value for the reproduction of the markup document in step 702.

If the language information recorded in VIDEO_TS.IFO of the interactive-DVD 300 has the language designated as the default value of the reproducing apparatus, the presentation engine 5 sets the language as the default value for reproduction of the markup document in step701.

The reader 1 reads the markup document prepared in the designated language in step 703. For example, if the Korean language is set as the default value for reproduction of the markup document, the reader 1 reads A.HTM stored in the Korean directory KOR of the multi-language markup document directory. The presentation engine 5 displays the read markup document in step 704.

If the user changes the language of the caption in step 705, the presentation engine 5 identifies whether the languages of the displayed markup documents can be changed during reproduction of the AV data by referring to the multi-language markup document information described above in step 706. If possible, the presentation engine retrieves the relevant markup document with reference to the multi-language markup document information and the reader 1 reads the retrieved markup document in step 707. The presentation engine 5 displays the read markup document in step 708. If the user completes the reproduction of the reproducing apparatus, the process ends in step 709. If the user changes the language of the caption again during the reproduction, steps 706 through 708 are repeated.

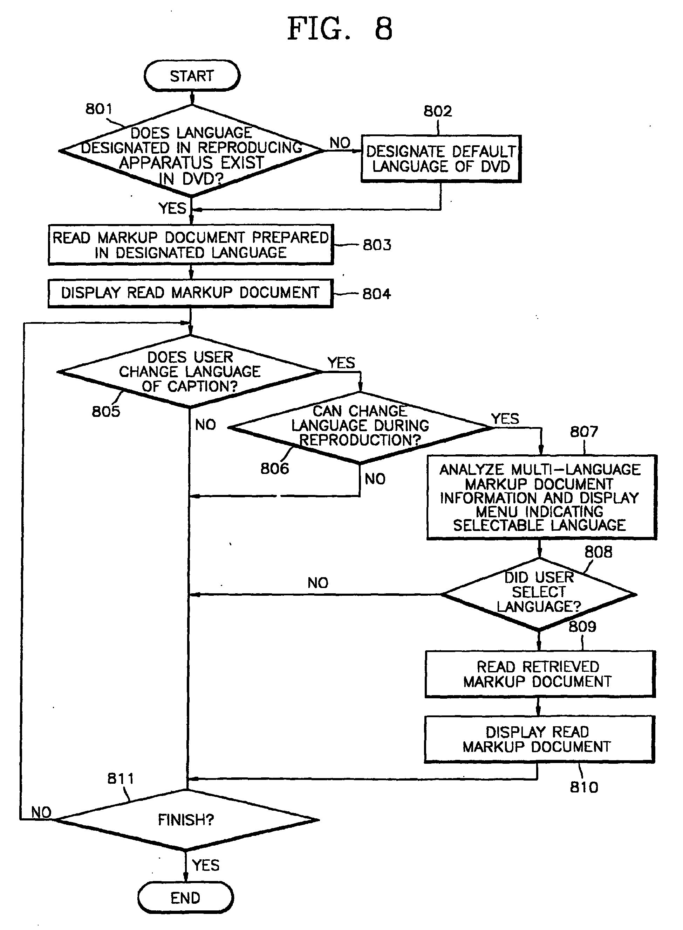

FIG. 8 is a flow chart explaining the reproduction method according to another embodiment of the present invention.

With reference to FIG. 8, if the interactive-DVD 300 according to the present invention is inserted into the reproducing apparatus, the presentation engine 5 of the reproducing apparatus retrieves the language information recorded on VIDEO_TS.IFO and identifies if the language designated as a default value of the reproducing apparatus exists in step 801. If the language information recorded on the VIDEO_TS.IFO of the interactive-DVD 300 does not have the language designated as the default value of the reproducing device, the presentation engine 5 sets the language designated as a default value of VIDEO_TS.IFO or DVD_ENAV.IFO of the interactive-DVD 300 as the default value for the reproduction of the markup document in step 802.

If the language information recorded on the VIDEO_TS.IFO of the interactive-DVD 300 has the language designated as the default value of the reproducing device, the presentation engine sets the language as the default value for reproduction of the markup document in step801.

The reader 1 reads the markup document prepared in the designated language in step 803. For example, if the Korean language is set as the default value for reproduction of the markup document, the reader 1 reads A.HTM recorded in the Korean directory KOR of the multi-language markup document directory. The presentation engine 5 displays the read markup document in step 804.

If the user requests the language of the markup document to be changed in step 805, the presentation engine 5 interprets the multi-language markup document information and identifies if the languages of the displayed markup documents can be changed during reproduction of the AV data in step 806. If the language change is possible, the presentation engine displays a menu where the kind of displayable languages that can be selected is indicated by referring to the displayable language information of the multi-language markup document information in step 807. If the user selects the language in step 808, the presentation engine 5 retrieves the relevant markup document by referring to the language directory information (and the language mapping table) and the reader 1 reads the retrieved markup document in step 809. The presentation engine 5 displays the read markup document in step 810. If the user completes the reproduction of the reproducing apparatus, the process ends in step 811. If the user requests the language of the markup document to be changed again during the reproduction, steps 806 through 810 are repeated.

As described above, preferred embodiments of the present invention relates to an information storage medium that displays the text information included in the markup document in the interactive mode in multiple languages and to an apparatus and a method for reproducing the information storage medium.

## Claims

1. An information storage medium comprising:
audio/video (AV) data; the information storage medium further comprising:
multiple markup documents which contain text information in multiple languages, respectively, to be displayed in a selected language and define a display window to display AV data decoded and reproduced as an AV data stream;
multi-language markup document support information for being referred to in order to display a markup document in the selected language;
sub-picture data for providing a multi-language captioning together with the reproduced AV data, wherein the multiple markup documents which contain text information on multiple languages are displayed in a selected language with regard to the AV data or the sub-picture data; and
navigation data on the AV data and the sub-picture data, wherein the AV data and the sub-picture data are decoded and reproduced as the AV data stream and captioning with reference to the navigation data; wherein
the AV data, the sub-picture data, and the navigation data are recorded on a video directory while the markup documents and the multi-language markup document support information are recorded on an interactive directory; wherein
the multi-language markup document support information comprises language selection conversion information for mapping a related markup document to the selected language, and language directory information for indicating the path to the markup documents; and wherein
the multi-language markup document support information further includes supportable language information that indicates the language that can be supported and information that indicates whether a language can be converted during reproduction.

2. A medium of claim 1 further comprising:
navigation data on the AV data,
wherein the AV data is decoded and reproduced as the AV data stream with reference to the navigation data.

3. A medium of claim 2, wherein the AV data and the navigation data are recorded on a video directory while the markup documents and the multi-language markup document support information are recorded on an interactive directory.

4. A medium of any one of claims 1 to 3, wherein the markup documents are saved in multi-language markup document directories created by language, which are sub-directories of the interactive directory.

5. A medium of any one of claims 1 to 4, wherein markup documents containing the same text information displayed in multiple languages have the same file name when saved.

6. A medium of any preceding claim, wherein the language selection conversion information includes a language selection conversion table where the language selected for caption display is mapped to a relevant language.

7. A reproducing method for reproducing AV data recorded on an information storage medium and displaying an AV data stream in a display window defined by a markup document, the reproducing method comprising:
(a) reading a markup document designed to be displayed in a selected language, out of markup documents that enable text information to be displayed in multiple languages, respectively;
(b) reading and decoding the AV data; and
(c) displaying the AV data as the AV data stream in a display window
(d) receiving information on a selected language in order to display the markup document;
(e) retrieving the language corresponding to the received language information; and
(f) retrieving the markup document in the directory corresponding to the retrieved language; wherein step (e) comprises:
(e0) verifying if the language can be converted during the reproduction and performing (e) if language conversion is possible.

8. A method according to claim 7, wherein in step (a) the markup document is designed to be displayed in a selected language for caption.

9. A method according to claims 7 or 8, the method for reproducing AV data and sub-picture data which presents multi-language captioning and for displaying the AV data and the sub-picture data in a display window defined by a markup document, the reproducing method further comprising in step (d) receiving language information on a selected language in order to present captioning and in step (e)
identifying the language corresponding to the received language information; and
In step (f) reading the markup document in the directory corresponding to the identified language.

10. A method of any one of claims 7 - 9, wherein step (d) comprises:
(d1) identifying a markup document conversion language code corresponding to the language code selected for caption display by using language mapping information; and
(d2) invoking the markup document in the directory where the identified language code is stored.

11. A method of claim 10, wherein in step (d2), the markup document stored in the directory that has the same name as that of the identified language code is invoked.

12. A method of any one of claims 7 - 11, wherein step (e) comprises:
(e1) retrieving the markup document conversion language code corresponding to the selected language by using language mapping information; and
(e2) retrieving and invoking the markup document in the directory corresponding to the retrieved language code.

13. A reproducing device for reproducing AV data recorded on an information storage medium and displaying the AV data in a display window defined by a markup document, the reproducing device comprising:
a reader for reading necessary data from the information storage medium; and
an AV decoder for decoding the AV data read by the reader;
a presentation engine for displaying an AV data stream reproduced after the decoder decodes the AV data, in a display window defined by a markup document, by interpreting a markup document that enables the inserted text information to be displayed in a selected language, out of multiple markup documents that enable inserted text information to be displayed in multiple languages, respectively;
wherein the device is arranged to further reproduce sub-picture data which presents multi-language captioning and display the captions in a display window defined by a markup document; and wherein the presentation engine is arranged to receive information on a selected language for caption display, to interpret the markup document stored in the directory where the received language information is stored by referring to multi-language markup document support information, and to display the AV data stream reproduced after the decoder decodes the AV data in the display window defined by the markup document;
wherein the presentation engine is arranged to refer to the multi-language markup document support information and to retrieve and invoke the markup document stored in the directory corresponding to the selected language;
wherein the presentation engine is arranged to refer to the multi-language markup document support information, to retrieve a markup document conversion language code corresponding to the language code selected for the caption display, and to retrieve and invoke the markup document stored in the directory where the retrieved language code is stored;
wherein the presentation engine is arranged to verify whether the language can be converted during the reproduction by referring to the multi-language markup document support information and to retrieve and invoke the markup document if language conversion is possible.

14. A device of claim 13, wherein the presentation engine is arranged to retrieve and to invoke the markup document stored in the directory which has the same name as that of the retrieved language code.

## Patentansprüche

1. Informationsspeichermedium, umfassend:
Audio/Video-Daten (AV-Daten); wobei das Informationsspeichermedium ferner folgendes umfaßt:
mehrere Markup-Dokumente, die Textinformationen in mehreren Sprachen zur jeweiligen Anzeige in einer gewählten Sprache enthalten und ein Anzeigefenster zum Anzeigen von als ein AV-Datenstrom decodierten und wiedergegebenen AV-Daten definieren;
mehrsprachige Markup-Dokumentunterstützungsinformationen zur Bezugnahme, um ein Markup-Dokument in der gewählten Sprache anzuzeigen;
Unterbilddaten zur Bereitstellung von mehrsprachigen Untertiteln zusammen mit den wiedergegebenen AV-Daten, wobei die mehreren Markup-Dokumente, die Textinformationen über mehrere Sprachen enthalten, in einer gewählten Sprache in bezug auf die AV-Daten oder die Unterbilddaten angezeigt werden; und
Navigationsdaten über die AV-Daten und die Unterbilddaten, wobei die AV-Daten und die Unterbilddaten als der AV-Datenstrom und Untertitel mit Bezug auf die Navigationsdaten decodiert und wiedergegeben werden; wobei
die AV-Daten, die Unterbilddaten und die Navigationsdaten auf einem Videoverzeichnis aufgezeichnet werden, während die Markup-Dokumente und die mehrsprachigen Markup-Dokumentunterstützungsinformationen auf einem interaktiven Verzeichnis aufgezeichnet werden; wobei
die mehrsprachigen Markup-Dokumentunterstützungsinformationen Sprachenauswahl-Umwandlungsinformationen zum Abbilden eines betreffenden Markup-Dokuments auf die gewählte Sprache und Sprachenverzeichnisinformationen zum Angeben des Pfads zu den Markup-Dokumenten umfassen; und wobei
die mehrsprachigen Markup-Dokumentunterstützungsinformationen ferner folgendes enthalten: Informationen der unterstützbaren Sprache, die die Sprache angeben, die unterstützt werden kann, und Informationen, die angeben, ob eine Sprache während der Wiedergabe umgewandelt werden kann.

2. Medium nach Anspruch 1, ferner umfassend:
Navigationsdaten über die AV-Daten, wobei die AV-Daten als der AV-Datenstrom mit Bezug auf die Navigationsdaten decodiert und wiedergegeben werden.

3. Medium nach Anspruch 2, wobei die AV-Daten und die Navigationsdaten auf einem Videoverzeichnis aufgezeichnet werden, während die Markup-Dokumente und die mehrsprachigen Markup-Dokumentunterstützungsinformationen auf einem interaktiven Verzeichnis aufgezeichnet werden.

4. Medium nach einem der Ansprüche 1 bis 3, wobei die Markup-Dokumente in nach Sprache erstellten mehrsprachigen Markup-Dokumentverzeichnissen abgespeichert werden, die Unterverzeichnisse des interaktiven Verzeichnisses sind.

5. Medium nach einem der Ansprüche 1 bis 4, wobei Markup-Dokumente, die dieselben Textinformationen in mehreren Sprachen angezeigt enthalten, beim Abspeichern denselben Dateinamen aufweisen.

6. Medium nach einem der vorhergehenden Ansprüche, wobei die Sprachenauswahl-Umwandlungsinformationen eine Sprachenauswahl-Umwandlungstabelle enthalten, in der die für die Untertitelanzeige ausgewählte Sprache auf eine relevante Sprache abgebildet wird.

7. Wiedergabeverfahren zum Wiedergeben von auf einem Informationsspeichermedium aufgezeichneten AV-Daten und zum Anzeigen eines AV-Datenstroms in einem durch ein Markup-Dokument definierten Anzeigefenster, wobei das Wiedergabeverfahren die folgenden Schritte umfaßt:
(a) Lesen eines Markup-Dokuments, das dafür ausgelegt ist, in einer gewählten Sprache angezeigt zu werden, aus Markup-Dokumenten, die die Anzeige von Textinformation jeweils in mehreren Sprachen ermöglichen;
(b) Lesen und Decodieren der AV-Daten; und
(c) Anzeigen der AV-Daten als den AV-Datenstrom in einem Anzeigefenster
(d) Empfangen von Informationen über eine gewählte Sprache, um das Markup-Dokument anzuzeigen;
(e) Abrufen der den empfangenen Spracheninformationen entsprechenden Sprache; und
(f) Abrufen des Markup-Dokuments in dem der abgerufenen Sprache entsprechenden Verzeichnis; wobei Schritt (e) folgendes umfaßt:
(e0) Verifizieren, ob die Sprache während der Wiedergabe umgewandelt werden kann, und Ausführen von (e), wenn Sprachenumwandlung möglich ist.

8. Verfahren nach Anspruch 7, wobei im Schritt (a) das Markup-Dokument dafür ausgelegt ist, in einer gewählten Sprache für Untertitel angezeigt zu werden.

9. Verfahren nach Anspruch 7 oder 8, wobei das Verfahren zum Wiedergeben von AV-Daten und Unterbilddaten, die mehrsprachige Untertitel präsentieren, und zum Anzeigen der AV-Daten und der Unterbilddaten in einem durch ein Markup-Dokument definierten Anzeigefenster dient, wobei das Wiedergabeverfahren ferner folgendes umfaßt: im Schritt (d) Empfangen von Spracheninformationen über eine gewählte Sprache, um Untertitel zu präsentieren, und im Schritt (e)
Identifizieren der Sprache, die den empfangenen Spracheninformationen entspricht; und
im Schritt (f) Lesen des Markup-Dokuments in dem Verzeichnis, das der identifizierten Sprache entspricht.

10. Verfahren nach einem der Ansprüche 7-9, wobei Schritt (d) folgendes umfaßt:
(d1) Identifizieren eines Markup-Dokumentumwandlungssprachencodes, der dem für Untertitelanzeige ausgewählten Sprachencode entspricht, durch Verwendung von Sprachenabbildungsinformationen; und
(d2) Aufrufen des Markup-Dokuments in dem Verzeichnis, in dem der identifizierte Sprachencode gespeichert ist.

11. Verfahren nach Anspruch 10, wobei im Schritt (d2) das Markup-Dokument, das in dem Verzeichnis gespeichert ist, das denselben Namen wie der identifizierte Sprachencode aufweist, aufgerufen wird.

12. Verfahren nach einem der Ansprüche 7-11, wobei Schritt (e) folgendes umfaßt:
(e1) Abrufen des Markup-Dokumentumwandlungssprachencodes, der der gewählten Sprache entspricht, durch Verwendung von Sprachenabbildungsinformationen; und
(e2) Abrufen und Aufrufen des Markup-Dokuments in dem Verzeichnis, das dem abgerufenen Sprachencode entspricht.

13. Wiedergabeeinrichtung zum Wiedergeben von auf einem Informationsspeichermedium aufgezeichneten AV-Daten und zum Anzeigen der AV-Daten in einem durch ein Markup-Dokument definierten Anzeigefenster, wobei die Wiedergabeeinrichtung folgendes umfaßt:
einen Leser zum Lesen notwendiger Daten aus dem Informationsspeichermedium; und
einem AV-Decodierer zum Decodieren der durch den Leser gelesenen AV-Daten;
eine Präsentations-Engine zum Anzeigen eines AV-Datenstroms, der wiedergegeben wird, nachdem der Decodierer die AV-Daten decodiert, in einem durch ein Markup-Dokument definierten Anzeigefenster durch Interpretieren eines Markup-Dokuments, das die Anzeige der eingefügten Textinformationen in einer gewählten Sprache ermöglicht, aus mehreren Markup-Dokumenten, die die Anzeige eingefügter Textinformationen jeweils in mehreren Sprachen ermöglichen;
wobei die Einrichtung dafür ausgelegt ist, ferner Unterbilddaten wiederzugeben, die mehrsprachige Untertitel präsentieren, und die Untertitel in einem durch ein Markup-Dokument definierten Anzeigefenster anzuzeigen; und wobei die Präsentations-Engine dafür ausgelegt ist, Informationen über eine gewählte Sprache zur Untertitelanzeige zu empfangen, das Markup-Dokument, das in dem Verzeichnis gespeichert ist, in dem die empfangenen Spracheninformationen gespeichert sind, zu interpretieren, indem auf mehrsprachige Markup-Dokumentunterstützungsinformationen Bezug genommen wird, und den AV-Datenstrom, der wiedergegeben wird, nachdem der Decodierer die AV-Daten decodiert, in dem durch das Markup-Dokument definierten Anzeigefenster anzuzeigen;
wobei die Präsentations-Engine dafür ausgelegt ist, sich auf die mehrsprachigen Markup-Dokumentunterstützungsinformationen zu beziehen und das Markup-Dokument abzurufen, das in dem Verzeichnis gespeichert ist, das der gewählten Sprache entspricht;
wobei die Präsentations-Engine dafür ausgelegt ist, sich auf die mehrsprachigen Markup-Dokumentunterstützungsinformationen zu beziehen, einen Markup-Dokumentumwandlungssprachencode abzurufen, der dem für die Untertitelanzeige ausgewählten Sprachencode entspricht, und das Markup-Dokument abzurufen und aufzurufen, das in dem Verzeichnis gespeichert ist, in dem der abgerufene Sprachencode gespeichert ist;
wobei die Präsentations-Engine dafür ausgelegt ist, zu verifizieren, ob die Sprache während der Wiedergabe umgewandelt werden kann, indem sie sich auf die mehrsprachigen Markup-Dokumentunterstützungsinformationen bezieht, und das Markup-Dokument abzurufen und aufzurufen, wenn Sprachenumwandlung möglich ist.

14. Einrichtung nach Anspruch 13, wobei die Präsentations-Engine dafür ausgelegt ist, das Markup-Dokument abzurufen und aufzurufen, das in dem Verzeichnis gespeichert ist, das denselben Namen wie der abgerufene Sprachencode aufweist.

## Revendications

1. Support de stockage d'informations comprenant :
des données audio/vidéo (AV), le support de stockage d'informations comprenant en outre :
de multiples documents de marquage qui contiennent des informations de texte dans de multiples langues, respectivement, destinées à être affichées dans une langue sélectionnée et qui définissent une fenêtre d'affichage afin d'afficher des données AV décodées et reproduites sous forme de train de données AV ;
des informations de support de documents de marquage en langues multiples auxquelles il est fait référence afin d'afficher un document de marquage dans la langue sélectionnée ;
des données de sous-image pour fournir des légendes en langues multiples avec les données AV reproduites, dans lequel les multiples documents de marquage qui contiennent des informations de texte sur de multiples langues sont affichés dans une langue sélectionnée relativement aux données AV ou aux données de sous-image ; et
des données de navigation sur les données AV et les données de sous-image, dans lequel les données AV et les données de sous-image sont décodées et reproduites sous forme de train de données AV et de légendes en référence aux données de navigation ; dans lequel
les données AV, les données de sous-image et les données de navigation sont enregistrées sur un répertoire vidéo tandis que les documents de marquage et les informations de support de documents de marquage en langues multiples sont enregistrés sur un répertoire interactif ; dans lequel
les informations de support de documents de marquage en langues multiples comprennent des informations de conversion de sélection de langue pour mettre en correspondance un document de marquage connexe avec la langue sélectionnée, et des informations de répertoire de langue pour indiquer le chemin d'accès aux documents de marquage ; et dans lequel
les informations de support de documents de marquage en langues multiples comportent en outre des informations de langue supportables qui indiquent la langue pouvant être supportée et des informations qui indiquent si une langue peut être convertie durant la reproduction.

2. Support selon la revendication 1, comprenant en outre :
des données de navigation sur les données AV,
dans lequel les données AV sont décodées et reproduites comme train de données AV en référence aux données de navigation.

3. Support selon la revendication 2, dans lequel les données AV et les données de navigation sont enregistrées sur un répertoire vidéo tandis que les documents de marquage et les informations de support de documents de marquage en langues multiples sont enregistrés sur un répertoire interactif.

4. Support selon l'une quelconque des revendications 1 à 3, dans lequel les documents de marquage sont sauvegardés dans des répertoires de documents de marquage en langues multiples créés par langue, lesquels sont des sous-répertoires du répertoire interactif.

5. Support selon l'une quelconque des revendications 1 à 4, dans lequel les documents de marquage contenant les mêmes informations de texte affichées dans de multiples langues ont le même nom de fichier lorsqu'ils sont sauvegardés.

6. Support selon l'une quelconque des revendications précédentes, dans lequel les informations de conversion de sélection de langue comportent une table de conversion de sélection de langue où la langue sélectionnée pour l'affichage des légendes est mise en correspondance avec une langue pertinente.

7. Procédé de reproduction pour reproduire des données AV enregistrées sur un support de stockage d'informations et afficher un train de données AV dans une fenêtre d'affichage définie par un document de marquage, le procédé de reproduction comprenant :
(a) la lecture d'un document de marquage conçu pour être affiché dans une langue sélectionnée, parmi des documents de marquage qui permettent d'afficher des informations de texte dans de multiples langues, respectivement :
(b) la lecture et le décodage des données AV ; et
(c) l'affichage des données AV sous forme de train de données AV dans une fenêtre d'affichage ;
(d) la réception d'informations sur une langue sélectionnée afin d'afficher le document de marquage ;
(e) le recouvrement de la langue correspondant aux informations de langue reçues ; et
(f) le recouvrement du document de marquage dans le répertoire correspondant à la langue recouvrée ;
dans lequel l'étape (e) comprend :
(e0) la vérification si la langue peut être convertie durant la reproduction et l'exécution de (e) si la conversion de langue est possible.

8. Procédé selon la revendication 7, dans lequel à l'étape (a) le document de marquage est conçu pour être affiché dans une langue sélectionnée pour les légendes.

9. Procédé selon la revendication 7 ou 8, le procédé pour reproduire des données AV et des données de sous-images qui présentent des légendes en langues multiples et pour afficher les données AV et les données de sous-image dans une fenêtre d'affichage définie par un document de marquage, le procédé de reproduction comprenant en outre à l'étape (d) la réception d'informations de langue sur une langue sélectionnée afin de présenter les légendes et à l'étape (e)
l'identification de la langue correspondant aux informations de langue reçues ; et
à l'étape (f) la lecture du document de marquage dans le répertoire correspondant à la langue identifiée.

10. Procédé selon l'une quelconque des revendications 7 à 9, dans lequel l'étape (d) comprend :
(d1) l'identification d'un code de langue de conversion de document de marquage correspondant au code de langue sélectionné pour l'affichage des légendes en utilisant les informations de mise en correspondance de langue ; et
(d2) l'appel du document de marquage dans le répertoire où le code de langue identifié est stocké.

11. Procédé selon la revendication 10, dans lequel à l'étape (d2), le document de marquage stocké dans le répertoire qui porte le même nom que celui du code de langue identifié est appelé.

12. Procédé selon l'une quelconque des revendications 7 à 11, dans lequel l'étape (e) comprend :
(e1) le recouvrement du code de langue de conversion de document de marquage correspondant à la langue sélectionnée en utilisant des informations de mise en correspondance de langue ; et
(e2) le recouvrement et l'appel du document de marquage dans le répertoire correspondant au code de langue recouvré.

13. Dispositif de reproduction pour reproduire des données AV enregistrées sur un support de stockage d'informations et afficher les données AV dans une fenêtre d'affichage définie par un document de marquage, le dispositif de reproduction comprenant :
un lecteur pour lire des données nécessaires depuis le support de stockage d'informations, et
un décodeur AV pour décoder les données AV lues par le lecteur ;
un moteur de présentation pour afficher un train de données AV reproduit après le décodage des données AV par le décodeur, dans une fenêtre d'affichage définie par un document de marquage, en interprétant un document de marquage qui permet d'afficher les informations de texte insérées dans une langue sélectionnée, parmi de multiples documents de marquage qui permettent d'afficher les informations de texte insérées dans de multiples langues, respectivement ;
dans lequel le dispositif est agencé pour reproduire en outre des données de sous-image qui présentent des légendes en de multiples langues et affichent les légendes dans une fenêtre d'affichage définie par le document de marquage ; et dans lequel le moteur de présentation est agencé pour recevoir des informations sur une langue sélectionnée pour l'affichage des légendes, pour interpréter le document de marquage stocké dans le répertoire où les informations de langue reçues sont stockées en faisant référence aux informations de support de documents de marquage en langues multiples, et pour afficher le train de données AV reproduit après le décodage des données AV par le décodeur dans la fenêtre d'affichage définie par le document de marquage ;
dans lequel le moteur de présentation est agencé pour se référer aux informations de support de documents de marquage en langues multiples ainsi que pour recouvrer et appeler le document de marquage stocké dans le répertoire correspondant à la langue sélectionnée ;
dans lequel le moteur de présentation est agencé pour se référer aux informations de support de documents de marquage en langues multiples, recouvrer un code de langue de conversion de document de marquage correspondant au code de langue sélectionné pour l'affichage de légendes, ainsi que pour recouvrer et appeler le document de marquage stocké dans le répertoire où est stocké le code de langue recouvré :
dans lequel le moteur de présentation est agencé pour vérifier si la langue peut être convertie durant la reproduction en se référant aux informations de support de documents de marquage en langues multiples ainsi que pour recouvrer et appeler le document de marquage si la conversion de langue est possible.

14. Dispositif selon la revendication 13, dans lequel le moteur de présentation est agencé pour recouvrer et appeler le document de marquage stocké dans le répertoire qui porte le même nom que celui du code de langue recouvré.
